Europäisches Patentamt

European Patent Office

Office européen des brevets

(11) Publication number: **0 380 343**
**A2**

## (12) EUROPEAN PATENT APPLICATION

(21) Application number: **90300800.1**

(22) Date of filing: **25.01.90**

(51) Int. Cl.⁵: **A23J 1/14, A23L 1/211**

(30) Priority: **25.01.89 US 301563**
**29.09.89 US 414014**

(43) Date of publication of application:
**01.08.90 Bulletin 90/31**

(84) Designated Contracting States:
**AT BE CH DE DK ES FR GB GR IT LI LU NL SE**

(71) Applicant: **ALKO LIMITED**
**Salmisaarenranta 7**
**SF-00180 Helsinki(FI)**

(72) Inventor: **Simell, Maarit**
**Emannankuja 2 H**
**SF-01670 Vantaa(FI)**
Inventor: **Elovainio, Minna**
**Vanhaistentie 12 E**
**SF-00420 Helsinki(FI)**
Inventor: **Varra, Martti**
**Aino Acktentie 10 A**
**SF-00400 Helsinki(FI)**
Inventor: **Varra, Timo**
**Itainen puistotie 16**
**SF-00140 Helsinki(FI)**

(74) Representative: **Sheard, Andrew Gregory et al**
**Kilburn & Strode 30, John Street**
**London WC1N 2DD(GB)**

(54) **Method for production of phytate-free or low-phytate soy protein isolate and concentrate.**

(57) A method by which phytate-free or low-phytate soy protein isolates and concentrates may be prepared is disclosed along with the phytate-free or low-phytate soy protein isolates and concentrates produced. The method involves using a phytate-degrading enzyme at a pH of from 2.0 to 6.0 at a temperature of from 20°C to 55°C.

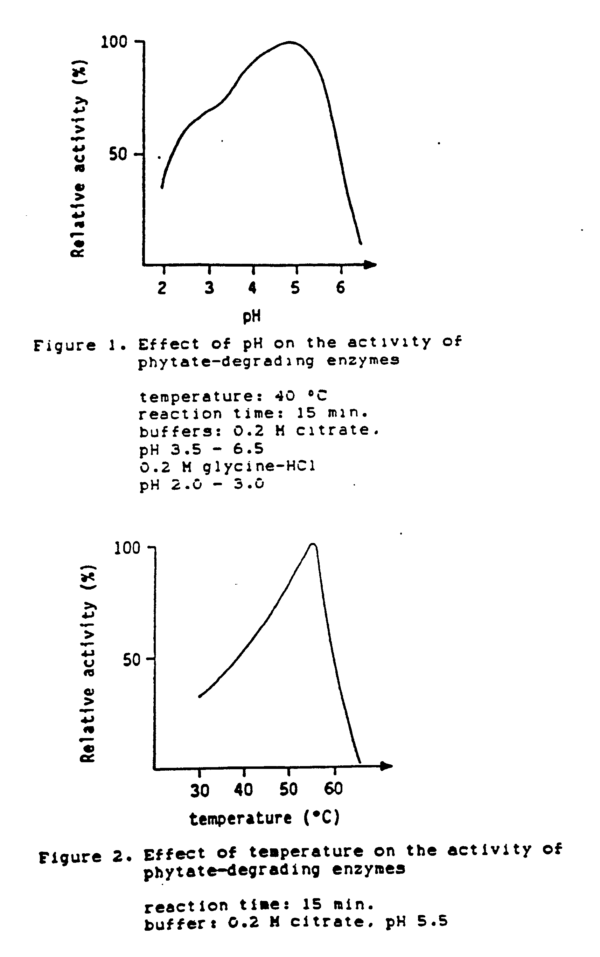

Figure 1. Effect of pH on the activity of
phytate-degrading enzymes

temperature: 40 °C
reaction time: 15 min.
buffers: 0.2 M citrate.
pH 3.5 - 6.5
0.2 M glycine-HCl
pH 2.0 - 3.0

## METHOD FOR PRODUCTION OF PHYTATE-FREE OR LOW-PHYTATE SOY PROTEIN ISOLATE AND CONCENTRATE

The present invention relates to novel methods and processes by which phytate-free or low-phytate soy protein isolates and concentrates may be prepared. The invention further relates to phytate-free or low-phytate soy protein isolates and concentrates produced according to the methods and processes of the present invention.

Phytic acid is present in soy beans as in many other plant seeds. Phytic acid in plants appears in the form of calcium, magnesium, and potassium salts, which in general are called phytin. A large part of the phosphorus content of seeds is stored in these compounds. For example, about 70% of the total phosphorus in soy beans is accounted for by phytin. When the terms phytate or phytic acid are used herein, it is intended to include salts of phytic acid and molecular complexes of phytic acid with other soy bean constituents.

Phytic acid tends to form complexes with proteins and multivalent metal cations. Phytic acid complexes decrease the nutritional quality of soy protein (for review, see e.g., Reddy et al., Adv. Food Res. 28:1-92 (1982); Cheryan, CRC Crit. Rev. Food Sci. Nutri. 13:297-335 (1980)). Phytic acid, because it interacts with multivalent metal cations, interferes with the assimilation by animals and humans of various metals such as calcium, iron, and zinc. This may lead to deficiency disorders, especially for vegetarians, elderly people and infants.

Phytic acid also inhibits various enzymes in the gastrointestinal tract, including pepsin and trypsin, and decreases the digestibility of soy protein. In addition, the phosphate present in phytic acid is not available to humans. Moreover, the presence of a relatively large amount of such unavailable phosphorus in infant food may lead to inadequate bone mineralization.

In typical commercial soy protein isolation processes, defatted soy flakes or soy flour are extracted at pH values between 8.0 and 10.0 to solubilize proteins. The slurry is centrifuged to separate the unsoluble part from the solution. The major fraction is recovered from the solution either by precipitating at a pH near the isoelectric point of the protein (4.5), separating it by centrifugation, washing the precipitate with water, redispersing it at pH 7, and spray-drying it (see, e.g., U.S. Pat. Nos. 3,001,875 and 3,397,991). In such processes, phytic acid will follow the protein, and tends to concentrate in the resulting soy protein product. The phytic acid content of commercial soy protein isolates is about 2-3%, whereas soy beans contain 1-2% phytic acid.

Because of the world-wide importance of soy beans as a food source, there have been many attempts to devise ways in which to reduce the phytate concentration of soy protein isolates and concentrates.

Thus, various chemical and physical treatments and plant phytases, either indigenous phytase or wheat phytase, have been used for preparing low-phytate soy protein isolates from soy beans. Fermentative methods with living molds have also been studied as ways of decreasing the phytic acid content of soy protein isolates.

None of these methods, however, provides a quick and economical method for production of phytate-free soy protein isolates without adversely affecting the functional properties of the protein.

Bolley et al, U.S. Pat. 2,732,395 describes a method for separation of phytic acid from various oil seeds with an aqueous extraction at a pH near the isoelectric point of the protein (about 4.5). Phytic acid is partly dissolved at this pH and is recovered. Protein is recovered by solubilizing it at alkaline pH, separating the insoluble portion, and precipitating the protein at a pH near the isoelectric point. The resulting protein fraction contained as much as 4% organic phosphorus.

McKinney et al., J. Biol. Chem. 178:117-132 (1949), note that phytic acid dissociates from soy protein at pH values between 11.0 and 11.5, and forms a precipitate that may be removed by centrifugation.

Goodnight et al., U.S. Pat. 4,072,670, observe that an alkali-stable complex is formed between protein and phytic acid in the acidic conditions used by Bolley et al. In an attempt to overcome this disadvantage, they describe precipitation of the phytate at pH values a little higher than those described by McKinney et al., i.e., pH values between 11.6 and 14. Phytate is then separated from the protein prior to protein precipitation at the protein isoelectric point (pH 4.5). One disadvantage of this process is that exposure of proteins to such an extremely alkaline pH adversely affects the nutritive value of proteins. Also, there is a tendency to increase the undesirable formation of lysinoalanine. In addition, commercial continuous centrifuges are unable to separate the very light phytate precipitate formed at such a high pH.

deRham, UK Pat. 1 574 110, discloses methods by which the phytic acid content of a soy protein isolate can be decreased from 2% to 0.6%, when protein precipitation from neutral soy extract (extracted at pH 8.0) is performed at pH 5.7 instead of pH 4.5. When soy proteins are extracted at pH 2.5 and recovered at pH 4.5, the phytic acid content is reported to be 1.7%. By performing the precipitation at pH 5.5, the phytic acid content was reportedly decreased to 0.7%. The phytic acid concentration of the isolate could be decreased to 0.2% by extracting the protein at pH 11.5 and recovering it at pH 5.5. However, these methods suffer from the drawback that the protein yield is decreased by as much as 20%, which renders them commercially impracticable.

deRham and Jost, J. Food Sci. 44:596-600 (1979), observe that calcium ions enhance the precipitation of soy protein at pH 11.5. Very low phytic acid concentrations could be achieved by extraction with 10% NaCl, but these methods produced an isolate which is effectively unusable without desalting by dialysis or ultrafiltration. Moreover, also the protein yield according to these methods is low.

Iacobucci et al., U.S. Pat. 3,736,147, disclose a method of reducing phytate concentration in soy protein involving various chemical treatments in combination with ultrafiltration. The chemical treatments include hydrolysis of phytic acid by indigenous phytase at neutral pH, ultrafiltration in the presence of calcium ions at low pH, or the use of EDTA at high pH. These methods have several disadvantages. Soy globulins are known to dissociate into subunits and to be denatured at such low pH values. The use of calcium ions at low pH values requires an additional ultrafiltration step for salt removal. The high temperature (65°C) in the phytase method may decrease the solubility of the protein on either side of the isoelectric point. The lowest phosphorous content achieved is not less than 0.2%, which corresponds to 0.7% phytic acid. The methods are also very time-consuming (18-48 h ultrafiltrations).

Puski et al., UK Pat. Appl. GB 2,180,241, disclose a soy protein preparation method in which proteins are extracted at a pH of 8 to 10 and at a temperature above 65°C. The protein product contains less than about 0.3% phytic acid. Again, however, such high temperatures may adversely affect the solubility and other functional properties of the proteins.

Brooks and Morr, J. Food Sci. 47:1280-1282 (1982), disclose a method for phytate removal from soy protein isolates using ion exchange treatments. A combination of cation and anion exchange processes is required for effective phytate removal. A dialysis step is used to remove other nonprotein components. This method, however, would be unacceptably complex and expensive for use on a commercial scale.

Enzymes, such as phytase, also have been used in the preparation of soy protein isolates. For example, McCabe, U.S. Pat. 3,733,207, describes the preparation of a soluble protein fraction having a decreased phytic acid content. Proteins are solubilized in alkaline conditions, and wheat phytase is added after lowering the pH to about 5. The protein fraction not precipitated at pH 4.5 is recovered. The resulting protein, because of its solubility in acidic conditions, is suitable for carbonated beverages. The enzyme treatment is long, however, requiring 24-36 hours. The phytic acid content of the protein is not reported.

Japanese Appl. 50,130,800, assigned to Asahi Chemical Ind. Kk, describes a process by which 60% of the phytic acid in aqueous plant seed extracts could be removed by a combination of wheat phytase and cation exchange resin treatment. The lowest phosphorous content of soy protein achieved is as high as 0.24%, which corresponds to 0.85% phytic acid.

Various fermentation processes have been proposed for improving the odor, flavor or digestibility of soy products. Typical fermentation processes, however, require an extensive amount of time, usually 24 hours or longer, and substantially alter the functional or physical characteristics of the protein.

Friend et al., U.S. Pat. 4,642,236, describe a quick method for improving soy product flavor, involving contacting soy protein with living mold pellets of Aspergillus or Rhizopus species. However, large amounts of mold - as much as 1 to 10 g - are needed per 100 g of protein on a dry weight basis for effective results in treating an aqueous slurry. Also, sulphite materials conventionally used in the extraction processes adversely affect the activity of the mold.

The use of phytase has been described in the treatment of soluble soy protein contained in soy milk. In preparing soy milk, soy beans are soaked overnight, disrupted and filtered. This filtrate is termed soy milk. After filtration, the soy milk typically is cooked to remove off-flavor compounds.

Anno et al., Nippon Shokuhin Kogyo Gakkaishi 32(3):174-180 (1985), report elimination of 90% of the phytate contained in commercial soy bean milk with wheat phytase. Nippon Shinyaku, Japanese Appl. 59,166,049, report a method of decomposing phytic acid in soy bean milk with wheat phytase, using free and immobilized phytases. Fujiwara et al., (Reports of Research Laboratory, Snow Brand Milk Products Co. No. 83 (1986) 31-41, Ref. FSTA 19 (1987) 9J118), report improvements in soy milk digestibility with Rhizopus sp. phytase treatment.

Microbial phytases have also been tested in decreasing the phytic acid content of feedstuffs without further processing to protein concentrates or isolates (Han and Wilfred, J. Agric. Food Chem. 36:259-262 (1988)). Autoclaving (121°C, 1 h) facilitates the degradation of phytic acid by Aspergillus ficuum phytase (85% degraded). Such high temperatures, however, alter the functional properties of the resulting protein and reduce its nutritional value.

The preceding discussion illustrates that considerable efforts have been expended to develop methods to reduce the phytic acid content of soy protein. These methods, however, have suffered from various drawbacks, including inefficient phytic acid reduction, high cost, long treatment time requirements, unacceptable alterations of the treated protein, and incompatability with commercial soy protein processing techniques.

As a result, there continues to be a need for an improved method of producing phytate-free or low-phytate soy protein isolates and concentrates which avoids these drawbacks, while allowing soy protein production on a practical commercial scale.

The present invention relates to novel methods and processes by which phytate-free or low-phytate soy protein isolates and concentrates may be prepared. The invention further comprises phytate-free or low-phytate soy protein isolates and concentrates produced according to the methods and processes of the present invention.

In a first aspect of the present invention there is provided a method of reducing or eliminating phytate in a composition comprising soy bean protein, the method comprising contacting a phytate degrading enzyme with the composition at a pH of from 2.0 to 6.0 at a temperature of from 20°C to 60°C. The method preferably has one or more of the following features:

a) the composition is a soy protein isolate or soy protein concentrate;

b) the temperature is from 40-55°C;

c) the pH is from 4.5 to 5.5;

d) the enzyme is added to the composition in the form of an enzyme preparation free of living matter, for example cells, such as microorganisms;

e) maintaining contact between the soy bean protein and enzyme for from 1.0 to 8.0 hours, preferably from 2 to 6 hours.

The enzyme preparation preferably comprises a phytase enzyme produced by Aspergillus niger and/or is substantially cell free. Suitably the enzyme preparation contains cellulase and/or has low proteolytic activity which is particularly suitable for soy protein. A particularly suitable enzyme preparation is that sold under the trade mark FINASE[R] S by Alko Ltd., Helsinki, Finland.

A second aspect of the present invention relates to a method for producing an essentially phytate-free or low-phytate soy protein isolate or concentrate comprising:

a) adding an enzyme preparation of microbial origin comprising at least one phytate degrading enzyme to a particulate soy bean water slurry;

b) allowing the phytate degradation to take place at a pH value of from 2.0 to 6.0, and at a temperature from 20°C to 55°C; and

c) isolating the resulting phytate-free or low-phytate soy protein.

A third aspect of the present invention is a method of substantially eliminating phytate from soy protein isolate or concentrate comprising:

a) adding to a phytate-containing soy protein isolate or concentrate an enzyme preparation of microbial origin comprising at least one phytate degrading enzyme; and

b) allowing phytate degradation to take place at a pH of from 2.0 to 6.0, and at a temperature of from 20°C to 55°C.

A fourth aspect of the present invention provides a method of producing an essentially phytate-free or low-phytate soy protein isolate, comprising:

a) suspending coarsely milled defatted soy particulate in an aqueous medium, suitably water, to form a suspension;

b) adjusting the pH of the suspension of step a) to from 2.0 to 6.0, preferably about pH 5.0;

c) introducing into the suspension of step b) a phytase reducing amount of FINASE[R] S;

d) incubating the suspension of step c) for from 1.0 to 8.0 hours (eg. 2-6 hours) at from 20°C to 50°C;

e) adjusting the pH of the suspension of step d) to about 9.0, and incubating the adjusted suspension for about 1 hour at room temperature;

f) separating the insoluble fraction from the suspension of step e); and

g) separating the soluble soy protein from the suspension of step f) thereby producing an essentially phytate-free or low-phytate soy protein isolate.

A fifth aspect of the present invention encompasses producing an essentially phytate-free soy protein isolate or concentrate, or a soy protein isolate having a reduced phytate concentration, comprising:

a) suspending an amount of commercial soy protein isolate in an aqueous medium, to form a suspension;

b) adjusting the pH of the suspension of step a) to from 2.0 to 6.0, preferably from 4.5 to 5.5, and more preferably about pH 5.0;

4

EP 0 380 343 A2

c) introducing into the suspension of step b) a phytase reducing amount of FINASE$^R$ S;

d) incubating the suspension of step c) for from 1.0 to 8.0 hours , eg. 2-6 hours, at from 20°C to 65°C, preferably about 40°C;

e) adjusting the pH of the suspension of step d) to about 4.5; and

f) separating the soy protein from the suspension of step e); thereby producing an essentially phytate-free soy protein isolate or concentrate, or a soy protein isolate having a reduced phytate concentration.

A sixth aspect of the present invention relates to an essentially phytate-free or low-phytate soy protein isolate or concentrate comprising:

a) extracting the protein from a defatted particulate soy bean aqueous suspension at a pH value of from 8.0 to 10.0;

b) removing any insoluble material from the suspension of step a);

c) adjusting the pH of the suspension of step b) to from 2.0 to 6.0, preferably from 4.5 to 5.5 and suitably about pH 5.0;

d) introducing into the suspension of step c) a phytase reducing amount of FINASE$^R$ S; and

e) incubating the suspension of step d) for from 1.0 to 8.0 hours at from 20°C to 55°C, preferably about 40°C; thereby producing an essentially phytate-free or low-phytate soy protein isolate or concentrate.

A seventh aspect of the present invention relates to an essentially phytate-free or low-phytate soy protein isolate or concentrate comprising:

a) extracting the protein from a deffated particulate soy bean aqueous suspension at a pH value of from 8.0 to 10.0;

b) removing any insoluble material from the suspension of step a);

c) adjusting the pH of the suspension of step b) to from 2.0 to 6.0, preferably from 4.5 to 5.5, and suitably about pH 5.0;

d) introducing into the suspension of step c) a phytase reducing amount of FINASE$^R$ S;

e) incubating the suspension of step d) for from 1.0 to 8.0 hours, eg. about 4 hours, at from 20°C to 55°C, preferably about 40°C;

f) adjusting the pH of the suspension of step e) to the isoelectric point of the protein to precipitate the protein; and

g) separating the precipitated protein of step f) to produce a precipitated protein and an aqueous solution; thereby producing an essentially phytate-free or low-phytate soy protein isolate or concentrate.

In an eighth aspect of the present invention there is provided a method of producing an essentially phytate-free or low-phytate soy protein isolate or concentrate comprising:

a) extracting the protein from a deffated particulate soy bean aqueous suspension at a pH value of from 8.0 to 10.0;

b) removing any insoluble material from the suspension of step a);

c) adjusting the pH of the suspension of step b) to the isoelectric point of the protein to produce a precipitated protein and an aqueous solution;

d) separating the precipitated protein of step c) from the aqueous solution of step c);

e) redispersing the protein of step d) in an aqueous solution;

f) adjusting the pH of the solution of step e) to from 2.0 to 6.0, for example about pH 5.5;

g) introducing into the solution of step f) a phytase reducing amount of FINASE$^R$ S;

h) incubating the solution of step g) for from 1.0 to 8.0 hours, preferably from 2 to 6 hours, eg. about 4 hours, at from 20°C to 55°C;

i) neutralizing the solution of step h); and

j) spray-drying the solution of step i); thereby producing an essentially phytate-free or low-phytate soy protein isolate and concentrate. Where aqueous suspension, solution or medium is referred to, this is preferably water.

It is preferred that the incubating temperature is about 55°C and/or the separating step comprises centrifugation or drum filtration. However, the separating step may comprise precipitation of the soluble soy protein by adjusting the pH of the suspension to 4.5. Generally the isoelectric point of the protein is about 4.5.

The present invention may thus provide easy and commercially attractive methods for preparing phytate-free and low-phytate soy protein isolates and concentrates. An advantage of the present invention is that these methods can be suitable for integration into commercial soy protein processing techniques, with an attendant improvement in the efficiency and economy of producing this important food source. The phytate hydrolysis may be performed before or after the isolation process or during the isolation process whenever the process conditions (pH and temperature) are adjusted to suit for the phytate degrading

5

enzyme. The many possible places for the enzyme treatment may make it easy for the manufacturer to adopt the process of the invention to their existing isolation process. Further, the methods of the present invention may not require exposing the soy protein to highly alkaline conditions causing decreased nutritive value in the resulting protein, and which produce a very light, suspended phytate precipitate that cannot be separated by commercial continuous separation equipment.

An additional advantage of the present invention is that the soy protein may not be exposed to high temperatures (eg., above 65°C) which may adversely affect the solubility and other functional properties of the soy protein product. Moreover, the methods of the invention avoid exposing the soy protein to living microorganisms, which may introduce contaminants into the soy protein product. Expensive and time-consuming steps, such as ultrafiltration and ion-exchange treatment, may be avoided by the methods of the present invention.

The present invention may thus provide simple methods for the preparation of low-phytate and phytate-free soy protein products without expensive chemical or physical treatments or equipment. The preferred sourse of soy proteins, such as soy bean water slurry, is defatted soy bean particulate, such as defatted soy flour, grits, or flakes.

In the various aspects of the present invention, phytic acid is eliminated by means of effective commercially available bulk enzyme compositions. Phytate-degrading enzymes dephosphorylate inositolhexaphosphate to yield inositol and orthophosphate, several forms of inositolphosphates being the intermediate products. Phytate-degrading enzymes include phytase and acid phosphatases.

Phytase and acid phosphatases are produced by various microorganisms such as Aspergillus spp., Rhizopus spp., and yeasts (Appl. Microbiol. 16:1348-1357 (1968; Enzyme Microb. Technol. 5:377-382 (1983)), and phytase is also produced by variuos plant seeds, for example wheat, during germination. According to methods known in the art, enzyme preparations can be obtained from the above mentioned organisms. Caransa et al, Netherlands Pat. Appl. 87.02735, found that at the same enzyme dosage phytase from Aspergillus spp. degraded phytic acid in corn more efficiently than phytase from wheat.

Particularly preferred for the purposes of the present invention are the Finase enzymes, formerly termed Econase EP 43 enzymes, manufactured by Alko Ltd., Rajamaki, Finland. These are described in U.S. application Serial Number 242,243, filed September 12, 1988.

Microbially produced enzyme preparations may also contain enzymes that degrade additional plant material such as enzymes with cellulase, hemicellulose, and/or pectinase activity. These other activities may contribute to the effects which are obtained by the methods of the invention.

The present invention may provide a method for eliminating phytic acid not only from a solubilized substrate such as soy milk or McCabe's soluble proteins, but also from an insoluble protein-phytic acid complex. This is a particular advantage of the invention, since these complexes have formed a significant problem with respect to obtaining high protein yields with low phytate concentrations. The Finase composition used in the methods of the invention is also capable of degrading phytic acid in the presence of the amount of sulphite materials conventionally used in the extraction procedure.

Stated most simply, in its broadest terms the present invention comprises:

(a) suspending defatted soy bean particulate in an aqueous medium in the presence of an enzyme preparation comprising one or more phytate-degrading enzymes; and

(b) isolating the resulting phytate-free or low phytate soy protein.

A preferred aqueous medium according to the present invention is water, suitably at neutral pH, but those of skill will recognize that any suitable aqueous medium may be employed with the exercise of routine skill, keeping in mind the particular requirements of the starting soy bean particulate preparation.

In a preferred embodiment of the invention, the soy protein isolation process of step (b) above may include the following:

(a) extraction of protein from the raw material in alkaline conditions, between pH values 8 and 10;

(b) separating the insoluble fraction containing carbohydrates by conventional solid separation unit processes such as filtration or centrifugation;

(c) precipitating soy protein at acidic conditions, between pH values 4.5 and 5.5;

(d) recovering the proteins by conventional solid separation unit processes;

(e) washing the proteins with acidic water, at the same pH as used for precipitation; and

(f) drying the proteins.

The enzyme treatment for phytic acid removal can also be applied to soy protein isolates or concentrates after isolation (see example 4). This treatment may include the following steps:

(a) suspending the protein isolate or concentrate with water in the presence of an enzyme preparation comprising one or more phytate-degrading enzymes;and

(b) direct use of the protein slurry in food applications or further handling, e.g., drying of the protein.

6

The enzyme can also be added directly to food, for example infant formula.

The methods of the present invention may be performed at pH values of from 2.0 to 6.0, such as from 3.5 to 5.5, and preferably from 5.0 to 5.5. Preferred temperatures according to the present invention are from 20°C to 60°C, such as about 40°C or from 50°C to 55°C being more preferred. The methods of the present invention prevent the formation of an alkali-stable protein-phytic acid complex in the acidic conditions described by Goodnight et al.

The amount of Finase enzyme preparation required will depend upon the preparation used, the phytic acid content of the raw material, and the reaction conditions. The right dosage can easily be estimated by a person skilled in the art. Preferably, the enzyme preparation comprises such an amount of one or more phytate-degrading enzymes that the phytic acid in soy beans is substantially degraded. The present invention may provide an easy and commercially attractive method for preparing low-phytate and phytate-free soy protein isolates without exposing the proteins to high alkalinity which decreases their nutritive value and at which a very light, suspended phytate precipitate, which cannot be separated with commercial continuous separators, is formed. It may also provide a method for preparing phytate-free soy protein isolate without exposing the proteins to temperatures above 65°C, which may affect the solubility and other functional properties of the protein. Also unnecessary contact of soy protein with living microorganisms and expensive and time-consuming purification steps, such as ultrafiltration and ion-exchange treatments may not be required.

It is to be understood that preferred features and characteristics as described above are applicable for one aspect of the present invention as they are for another aspect, mutatis mutandis.

In the accompanying drawings;

Figure 1 is a graph showing the effect of pH on the activity of Finase composition of phytate-degrading enzymes. The pH effect was measured at 40°C after a 15 minute incubation, in 0.2 M citrate (pH 3.5 - 6.5) and 0.2 M glycine-HCl (pH 2.0 - 3.0) buffers; and

Figure 2 is a graph showing the effect of temperature on the activity of a Finase composition of phytate-degrading enzymes. The temperature effect was measured after a 15 minute incubation in a 0.2 M citrate buffer, pH 5.5.

The invention will now be described by way of examples which are not intended to be limiting on the present invention.

## COMPARATIVE EXAMPLE 1

### The Activity of Phytate-Degrading Enzymes at Different pH Values and Temperatures

This example shows the effect of pH and temperature on the activity of commercial phytate-degrading enzymes, Finase enzymes of Alko Ltd., Rajamaki, Finland (Figures 1 and 2).

Phytate-degrading activity was determined by using 1% sodium phytate (Sigma, St. Louis, Missouri) as a substrate. The enzyme reaction was carried out at pH 5.5 and 40°C. Phytate-degrading enzymes release phosphate groups from phytate. The determination of the released inorganic phosphorous is based on the color formed by the reduction of a phosphomolybdate complex.

Figures 1 and 2 show that the Finase enzymes degrade phytate over a broad pH range from 2.0 to 6.0 and at temperatures under 60°C. Optimal and preferred pH ranges are between about 5.0 and about 5.5. Optimal and preferred temperatures are between about 50 and 60°C. Variations from these optimal ranges are, of course, possible, depending upon the particular needs and requirements that will be apparent to those of skill. Such variations are to be understood as being within the intended scope of the present invention.

## COMPARATIVE EXAMPLE 2

### Production of Low Phytate Soy Protein Isolate on a Laboratory Scale

Twenty g of defatted soy flakes (Unilever, Amsterdam, The Netherlands) were milled coarsely and suspended with 300 ml of water. The pH was adjusted to 5.0 and an amount of Finase$^R$ S was added to the slurry. Phytate-degrading activities are a major component of this enzyme preparation. In the control test no enzyme was added. Suspensions were incubated for 4 hours in a shaker at 40°C.

The enzyme dosages are presented as phytate-degrading units/g flakes. One phytate-degrading unit (1 PU) is the amount of enzyme which liberates 1 nmol of inorganic phosphorous from sodium phytate per minute under standard conditions (40°C, pH 5.5).

After the enzyme treatment, the pH was adjusted to 9.0 and the suspension was incubated for 1 hour at room temperature. The insoluble fraction was removed by centrifugation. The proteins were precipitated from the supernatant by adjusting the pH to 4.5. The precipitate was recovered by centrifugation and freeze-dried. Protein yield and phytate contents of the protein fraction were determined.

For determination of the phytate content, the protein fraction was extracted with an acidic liquid for 30 minutes at room temperature. Phytic acid was then precipitated from the clear supernatant with ferric chloride. Ferric ions were removed by precipitation with sodium hydroxide. Phytate was determined by HPLC (High Performance Liquid Chromatography) using sodium phytate as a standard. Table 1 shows the residual phytic acid content of the proteins and the protein yields (dry weight basis).

TABLE 1

| Phytate Concentration and Protein Yield Achieved by Soy Protein Isolation According to the Invention on a Laboratory Scale | | |
| --- | --- | --- |
| Finase dosage PU/g soy flakes | Phytic acid % | Protein yield % |
| 0 | 1.9 | 25 |
| 500 | 0.6 | 26 |
| 750 | 0.0 | 24 |

Table 1 shows that by using the process of the invention phytate-free soy protein isolates can be achieved while maintaining high protein yields.

## COMPARATIVE EXAMPLE 3

Production of Low Phytate Soy Protein Isolate on a Pilot Scale

Fifteen kg of defatted soy flakes (Unilever, Amsterdam, The Netherlands) were milled coarsely and suspended in 235 l of water. The pH was adjusted to 5.0, and Finase[R] S was added at a dosage of 1000 PU/g soy flakes. In the control test, no Finase[R] S enzyme was added. The suspension was incubated for 4 hours at 40°C with agitation. After the enzyme treatment, the pH was adjusted to 9.0 with NaOH flakes and the mixture was incubated for 1 hour without heating. After the alkaline extraction the mixture was cooled and the insoluble fraction was removed by drum filtration. Protein was precipitated by adjusting the pH to 4.5 with 30% $H_3PO_4$. The precipitate was recovered by separation and washed with water at pH 4.5. The separated protein fraction was freeze-dried.

The phytate content of the protein and the protein yield (dry weight basis) were determined. The results are shown in Table 2.

TABLE 2

| Phytate Concentration and Protein Yield Achieved by Soy Protein Isolation According to the Invention on a Pilot Scale | | |
|---|---|---|
| Finase dosage PU/g soy flakes | Phytic acid % | Protein yield % |
| 0 | 1.8 | 22 |
| 1000 | 0.6 | 21 |

Table 1 shows that, using the process of the invention on a large scale, low-phytate soy protein isolate can be produced without a sacrifice in protein yield.

COMPARATIVE EXAMPLE 4

Reduction of Phytate content of Soy Protein Isolate

Ten g of commercial soy protein isolate (Purina Protein 1500, St. Louis, Missouri) were suspended in 100 ml of water. The pH was adjusted to 5.5, and Finase[R] S was added at dosages of 150, 500, 1000 PU/g protein. In the control test, no enzyme was added. Suspensions were incubated for 4 hours at 55° C.

After Finase treatment, the pH was adjusted to 4.5, and the proteins were recovered by centrifugation and freeze-dried. The phytate content of the protein isolate and the protein yields (dry weight basis) were determined. Results are shown in Table 3.

TABLE 3

| Phytate Reduction and Protein Yield Achieved by Treatment of Soy Protein Isolate According to the Invention on a Laboratory Scale | | |
|---|---|---|
| Finase dosage PU/g soy flakes | Phytic acid % | Protein yield % |
| 0 | 1.8 | 89 |
| 150 | 1.1 | 88 |
| 500 | 0.0 | 86 |
| 1000 | 0.0 | 84 |

Table 3 shows that phytate-free soy protein isolates can also be produced by treating soy protein isolates with phytate-degrading enzymes after the protein isolation.

COMPARATIVE EXAMPLE 5

Reduction in Inositol Phosphate Achieved by Soy Protein Isolation According to the Invention

Twenty g of defatted soy flakes (Unilever, Amsterdam, The Netherlands) were milled coarsely and suspended with 300 ml of water. The pH was adjusted to 9.0, and the suspension was incubated for 1 hour at room temperature. The insoluble fraction was removed by centrifugation.

The pH of the supernatant was adjusted to 5.0, and an amount of Finase[R] S was added to the slurry. Phytate-degrading activities are a major component of this enzyme preparation. The suspension was incubated for 4 hours at 55°C. In the control test, no enzyme treatment was conducted.

The enzyme dosages are presented as phytate degrading units/g flakes. One phytate-degrading unit (1 PU) is the amount of enzyme which liberates 1 nmol of inorganic phosphorous from sodium phytate per minute under standard conditions (40°C, pH 5.5).

The proteins were precipitated from the suspension by adjusting the pH to 4.5. The precipitate was recovered by centrifugation and freeze-dried. Protein yield and inositol phosphate contents of the protein fraction were determined.

The inositol hexa-, penta-, tetra- and triphosphates were determined according to the method of Sandberg et al., J. Food Sci. 54:159-162 (1989). Table 4 shows the contents of residual inositol phosphates of the proteins and the protein yields (dry weight basis).

TABLE 4

| Inositol Phosphate Concentrations and Protein Yield Achieved by Soy Protein Isolation According to the Invention on a Laboratory Scale | | | | | |
| --- | --- | --- | --- | --- | --- |
| Finase dosage Protein yield PU/g soy flakes (%) | | IP3 μmol/g | IP4 μmol/g | IP5 μmol/g | IP6 μmol/g |
| 28.2 | 0 | 0.00 | 1.97 | 2.58 | 11.39 |
| 26.1 | 500 | 0.00 | 0.00 | 0.00 | 0.00 |

## Claims

1. A method of reducing or eliminating phytate in a composition comprising soy protein, the method comprising contacting a phytate-degrading enzyme with the composition at a pH of from 2.0 to 6.0 at a temperature of from 20°C to 60°C.

2. A method as claimed in claim 1 comprising:

a) adding an enzyme preparation of microbial origin comprising at least one phytate degrading enzyme to a particulate soy bean water slurry or a phytate containing soy protein isolate;

b) allowing phytate degradation to take place at a pH value of from 2.0 to 6.0, and at a temperature of from 20°C to 55°C; and

c) in the case of the slurry, isolating the resulting soy protein.

3. A method as claimed in claim 1 or 2, wherein the enzyme originates from Aspergillus spp., Rhizopus spp., or yeast.

4. A method as claimed in claim 1, 2 or 3 comprising:

a) suspending coarsely milled defatted soy particulate in an aqueous medium, to form a suspension;

b) adjusting the pH of the suspension to from 2.0 to 6.0, preferably from 4.5 to 5.5;

c) introducing into the suspension a phytase reducing amount of FINASE[R] S;

d) incubating the suspension for from 1.0 to 8.0 hours, at from 20°C to 50°C;

e) adjusting the pH of the suspension to about 9.0, and incubating the adjusted suspension for about 1 hour at room temperature;

f) separating an insoluble fraction from the suspension; and

g) separating the soluble soy protein from the suspension.

5. A method as claimed in claim 1, 2 or 3 comprising:

a) extracting protein from a defatted particulate soy bean aqueous suspension having a pH value of from 8.0 to 10.0;

b) removing any insoluble material from the suspension;

c) adjusting the pH of the suspension to from 2.0 to 6.0;

d) introducing into the suspension a phytase reducing amount of FINASE$^R$ S;

e) incubating the suspension for from 1.0 to 8.0 hours at from 20°C to 55°C;

f) optionally adjusting the pH of the suspension of (e) to the isoelectric point of the protein to precipitate the protein and separating the precipitated protein to produce a precipitated protein and an aqueous solution.

6. A method as claimed in claim 1, 2 or 3 comprising:

a) suspending an amount of commercial soy protein isolate in an aqueous medium, to form a suspension;

b) adjusting the pH of the suspension to from 2.0 to 6.0;

c) introducing into the suspension a phytase reducing amount of FINASE$^R$ S;

d) incubating the suspension for from 1.0 to 8.0 hours, at a temperature of from 20°C to 65°C;

e) adjusting the pH of the suspension to about 4.5; and

f) separating the soy protein from the suspension thereby producing an essentially phytate-free soy protein isolate or concentrate, or a soy protein isolate having a reduced phytate concentration.

7. A method as claimed in claim 1, 2 or 3 comprising:

a) extracting the protein from a defatted particulate soy bean aqueous suspension at a pH value of from 8.0 to 10.0;

b) removing any insoluble material from the suspension;

c) adjusting the pH of the suspension to the isoelectric point of the protein to produce a precipitated protein and an aqueous solution;

d) separating the precipitated protein from the aqueous solution;

e) redispersing the precipitated protein in an aqueous solution;

f) adjusting the pH of the aqueous solution to from 2.0 to 6.0;

g) introducing to the solution a phytase reducing amount of FINASE$^R$ S;

h) incubating the solution for from 1.0 to 8.0 hours at from 20°C to 55°C;

i) neutralizing the solution;

j) spray-drying the solution.

8. A method as claimed in any of claims 1 to 7, wherein the concentration of enzyme, such as FINASE$^R$ S, is from 250 to 1000 PU/g soy particulate, preferably from 500 to 750 PU/g soy particulate.

9. A method as claimed in claim 1 having one or more of the following features:

a) the composition is a soy protein isolate or soy protein concentrate;

b) the temperature is from 40-55°C;

c) the pH is from 4.5 to 5.5;

d) the enzyme is added to the composition in the form of an enzyme preparation free of living matter, such as microorganisms;

e) maintaining contact between the soy bean protein and enzyme for from 1.0 to 8.0 hours, preferably from 2 to 6 hours.

10. A soy protein isolate or concentrate prepared by the method as claimed in any of claims 1 to 9.

Figure 1. Effect of pH on the activity of
phytate-degrading enzymes

temperature: 40 °C
reaction time: 15 min.
buffers: 0.2 M citrate.
pH 3.5 - 6.5
0.2 M glycine-HCl
pH 2.0 - 3.0

Figure 2. Effect of temperature on the activity of
phytate-degrading enzymes

reaction time: 15 min.
buffer: 0.2 M citrate, pH 5.5